(19) Europäisches Patentamt
European Patent Office
Office européen des brevets

(11) EP 3 196 014 B1

(12) # EUROPÄISCHE PATENTSCHRIFT

(45) Veröffentlichungstag und Bekanntmachung des Hinweises auf die Patenterteilung:
**24.10.2018 Patentblatt 2018/43**

(51) Int Cl.:
***B32B 27/08*** *(2006.01)* ***B32B 27/18*** *(2006.01)*
***B32B 27/20*** *(2006.01)* ***B32B 27/36*** *(2006.01)*
***A01G 9/14*** *(2006.01)* ***A01G 9/22*** *(2006.01)*

(21) Anmeldenummer: **17151729.5**

(22) Anmeldetag: **17.01.2017**

(54) **BIAXIAL ORIENTIERTE, UV-STABILISIERTE, EIN- ODER MEHRSCHICHTIGE POLYESTERFOLIE MIT EINER KOMBINATION AUS SILIZIUMDIOXIDPARTIKELN ALS LICHTSTREUPARTIKEL UND EINEM UV-STABILISATOR SOWIE VERFAHREN ZU IHRER HERSTELLUNG UND IHRE VERWENDUNG IN GEWÄCHSHAUSSCHATTENMATTEN**

BIAXIALLY ORIENTED, UV-STABILIZED, SINGLE OR MULTI-LAYER POLYESTER FILMS COMPRISING SILICON DIOXIDE PARTICLES AS LIGHT DIFFUSION PARTICLES AND A UV STABILIZER, AND METHOD FOR THEIR PREPARATION AND THEIR USE IN GREENHOUSE SHADOW MATS

FEUILLE DE POLYESTER ORIENTÉE BIAXIALEMENT, STABILISÉE AUX UV, MONOCOUCHE OU MULTICOUCHE, COMPRENANT UNE COMBINAISON DE PARTICULES D'OXYDE DE SILICIUM EN TANT QUE PARTICULE DE DISPERSION DE LUMIÈRE ET UN STABILISATEUR D'UV, ET SON PROCÉDÉ DE FABRICATION ET D'UTILISATION DANS DES OMBRAGES DE SERRE

(84) Benannte Vertragsstaaten:
**DE FR GB IT LU NL PL SE**

(30) Priorität: **22.01.2016 DE 102016200875**

(43) Veröffentlichungstag der Anmeldung:
**26.07.2017 Patentblatt 2017/30**

(73) Patentinhaber: **Mitsubishi Polyester Film GmbH
65203 Wiesbaden (DE)**

(72) Erfinder:
- **Lohre, Claudia
65185 Wiesbaden (DE)**
- **Kliesch, Holger
65462 Ginsheim (DE)**
- **Bork, Andreas
67593 Wiesbaden (DE)**
- **Ünker, Yavuz
55268 Nieder-Olm (DE)**

(74) Vertreter: **Schweitzer, Klaus
Plate Schweitzer Zounek
Patentanwälte
Rheingaustrasse 196
65203 Wiesbaden (DE)**

(56) Entgegenhaltungen:
**EP-A1- 1 614 707**
**EP-A2- 1 614 536**
**DE-A1-102005 058 918**
**DE-A1-102010 007 139**
**DE-A1-102010 007 140**
**DE-A1-102011 009 817**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine stark lichtstreuende, biaxial orientierte, UVstabile Polyesterfolie mit hoher Transparenz und mindestens einer Basisschicht, welche Siliziumdioxidpartikel und einen UV-Stabilisator enthält. Die erfindungsgemäße Folie eignet sich zur Herstellung von Gewächshausschattenmatten. Die Folie weist spezielle Transparenzeigenschaften und eine hohe Streuung auf. Die Erfindung betrifft ferner ein Verfahren zur Herstellung der Polyesterfolie sowie ihre Verwendung in Gewächshäusern.

EP1614707 offenbart Biaxial orientierte Polyesterfolie enthaltend a) als Hauptbestandteil einen kristallisierbaren Polyester, der gegenüber Standardpolyestern einen erhöhten Diethylenglykol- und/oder Isophthalsäure- und/oder Polyethylenglykolgehalt aufweist; b) mindestens ein IR-reflektierendes Pigment und; c) mindestens einen UV-Stabilisator. Die Folien eignen sich für Gewächshäuser.

## Beschreibung

Folien für Schattenmatten in Gewächshäusern müssen eine Reihe von Anforderungen erfüllen. Zum einen soll der für das Pflanzenwachstum benötigte Teil des Lichtes durch die Folie/Schattenmatte hindurchgehen und der nicht benötigte Teil, der zu einer übermäßigen Erwärmung des Gewächshauses führen würde, soll reflektiert werden. In der Nacht soll die Schattenmatte zudem die vom Boden aufsteigende Wärme sowohl durch Konvektionsbremse, als auch wiederum durch Reflektion im Gewächshaus halten.

Für das durchgehende Licht ist es zudem von Vorteil, wenn das Licht die Pflanze so diffus wie möglich erreicht, da dies sowohl die Orientierung der Pflanze nach der Lichtquelle reduziert als auch ein besseres Ausleuchten auch tiefer gelegener Pflanzenteile ermöglicht. Hierzu ist ein Mindest-Streuwinkel nötig, da bei zu kleinen Streuwinkeln der weitaus größte Teil des Lichtes immer noch direkt aus der Richtung der Lichtquelle eintrifft. Der Streuwinkel darf aber auch nicht zu groß werden, da dann tiefergelegene Pflanzenteile nicht erreicht werden können, da Nachbarpflanzen diese dann abschatten und zudem wird, insbesondere bei kleineren Gewächshäusern, zu viel Licht aus dem Gewächshaus heraus gestreut. Die Folie sollte zudem eine Transparenz (ASTM D-1003) von 70 bis 92 % aufweisen, um eine gute Balance zwischen Sonnenschutz und optimaler Lichtversorgung zu bieten. Die Folie muss zudem eine UV-Stabilität aufweisen, die es ermöglicht die Schattenmatte mindestens 5 Jahre in einem Gewächshaus im Einsatz zu lassen, ohne dabei signifikant zu vergilben oder Versprödungen oder Rissbildungen an der Oberfläche zu zeigen oder in den mechanischen Eigenschaften gravierend nachzulassen.

Da Brände in Gewächshäusern eine Quelle hoher wirtschaftlicher Schäden sind, muss die Folie eine reduzierte Entflammbarkeit aufweisen.

Die Aufgabe der vorliegenden Erfindung bestand darin, eine biaxial orientierte Polyesterfolie herzustellen, die sich durch eine hohe Transparenz von 70 bis 92 % auszeichnet, zudem eine reduzierte Entflammbarkeit aufweist und sich insbesondere durch eine für Gewächshausanwendungen geeignete Streuwirkung auszeichnet. Insbesondere soll die Folie bei mehrjähriger Außenanwendung nicht signifikant vergilben, keine Versprödung oder Rissbildung der Oberfläche zeigen und auch keine für die Anwendung kritische Verschlechterung der mechanischen Eigenschaften aufweisen. Die Folie soll sich im Dickenbereich von 13 bis 25 μm zudem wirtschaftlich auf existierenden Polyesterfolien Ein- oder Mehrschichtanlagen herstellen lassen.

Gelöst wird diese Aufgabe durch eine ein- oder mehrschichtige Polyesterfolie, die eine Transparenz von 70 bis 92 % aufweist, wobei:

- die Folie mindestens 1,0 Gew.-% $SiO_2$ und maximal 2,5 Gew.-% $SiO_2$ enthält,
- wobei diese $SiO_2$-Partikel einen $d_{50}$-Wert zwischen 3 und 9 μm aufweisen,
- der SV-Wert der Folie mindestens 700 beträgt,
- Die Folie einen Streufaktor SF von mindestens 2 und nicht mehr als 8 aufweist
- Die Folie weist eine Trübung von 60-95% auf und
- Eine Clarity von 15-40% auf
- Alle außen liegenden Schichten mindestens 0,3 Gew. % (bezogen auf das Gewicht der Schicht) eines organischen UV-Stabilisators enthalten

Die Gesamtfoliendicke beträgt mind. 13 μm und maximal 25 μm. Bevorzugt liegt die Foliendicke bei mindestens 14 und maximal 23 μm und idealerweise bei mindestens 14,5 μm und maximal 21 μm. Liegt die Foliendicke unter 13 μm, so wird das Risiko der Folienbeschädigung mit Rissausbildung in der Endanwendung im Gewächshaus zu groß und die mechanische Festigkeit der Folie reicht nicht mehr aus, um die in der Anwendung in der Schattenmatte auftretenden Züge ohne Verdehnungen aufzunehmen. Oberhalb von 40 μm wird die Folie zu steif und im geöffneten, aufgezogenen Zustand entsteht ein zu großer "Folienballen" mit entsprechender zu großer Abschattung.

Einschichtige Folien bestehen nur aus einer einzigen Schicht, die auch Basisschicht genannt wird. Bei einer

mehrschichtigen Ausführung besteht die Folie aus der (d.h. einer) Basisschicht und mindestens einer weiteren Schicht, die je nach Positionierung in der Folie als Zwischenschicht (mindestens jeweils eine weitere Schicht befindet sich dann auf jeder der beiden Oberflächen) oder Deckschicht (die Schicht bildet eine Außenschicht der Folie) bezeichnet wird. Bei der mehrschichtigen Ausführung ist die Dicke der Basisschicht mindestens genauso groß wie die Summe der übrigen Schichtdicken. Bevorzugt liegt die Dicke der Basisschicht bei mindestens 55 % der Gesamtfoliendicke und idealerweise bei mindestens 63 % der Gesamtfoliendicke. Die Dicke der übrigen Schichten, bevorzugt der Deckschichten beträgt mindestens 0,5 $\mu$m, bevorzugt mindestens 0,6 $\mu$m und idealerweise mindestens 0,7 $\mu$m. Die Dicke der Deckschichten beträgt maximal 4 $\mu$m und bevorzugt maximal 3 $\mu$m und idealerweise maximal 1,5 $\mu$m. Unterhalb von 0,5 $\mu$m sinkt die Prozessstabilität und die Dickengleichmäßigkeit der Deckschicht. Ab 0,7 $\mu$m wird eine sehr gute Prozessstabilität erreicht. Wenn die Deckschichten zu dick werden sinkt die Wirtschaftlichkeit, da aus Gründen der Eigenschaftssicherung (insbesondere der UV-Stabilität), Regenerate nur der Basis zugeführt werden sollten und bei zu geringer Basisschichtdicke im Vergleich zur Gesamtdicke muss dieser Schicht dann prozentual zu viel Regenerat zugeführt werden, um den Regeneratkreislauf zu schließen. Dies kann dann auch über die Basisschicht die Eigenschaften wie z.B. UV-Stabilität und Transparenz negativ beeinflussen. Zudem sinkt der Oberflächeneffekt der Siliziumdioxidpartikel ab 2 $\mu$m (und insbesondere sehr stark ab 3 $\mu$m Schichtdicke) zu stark ab und es wird eine größere Partikelmenge benötigt, um die gewünschte Streuwirkung zu erreichen.

Die Folie muss zudem eine geringe Transmission im Wellenlängenbereich von unterhalb 370 nm bis 300 nm aufweisen. Diese liegt bei jeder Wellenlänge im angegebenen Bereich bei kleiner 40 % bevorzugt bei kleiner 30 % und idealerweise bei kleiner 15 % (Verfahren s. Meßmethoden). Hierdurch wird die Folie vor Versprödung und Vergilbung geschützt, zudem werden hierdurch die Pflanzen und Installationen im Gewächshaus vor dem UV-Licht geschützt. Oberhalb von 390 nm liegt die Transparenz bei größer 15 %, bevorzugt bei größer 20 % und idealerweise bei größer 30 %, da dieser Wellenlängenbereich bereits deutlich photosynthese-aktiv ist und das Pflanzenwachstum bei zu starker Filterung in diesem Wellenlängenbereich negativ beeinflusst würde. Die geringe UV Durchlässigkeit wird durch den Zusatz von organischem UV-Stabilisator erzielt. Eine geringe Durchlässigkeit für UV-Licht schützt die in der Folie und den gegebenenfalls darin enthaltenen Flammstabilisator vor schneller Zerstörung und starker Vergilbung. Der organische UV-Stabilisator wird dabei aus der Gruppe der Triazine, Benzotriazole oder Benzoxazinone ausgewählt. Besonders bevorzugt sind dabei Triazine insbesondere 2-(4,6-Diphenyl-1,3,5-triazin-2-yl)-5-(hexyl)oxy-phenol (Tinuvin® 1577).

Die Folie, bzw. im Fall einer Mehrschichtfolie mindestens eine Deckschicht, bevorzugt beide Deckschichten enthalten daher mindestens einen organischen UV-Stabilisator. Bevorzugte UV-Stabilisatoren sind dabei Triazinderivate insbesondere 2-(4,6-Diphenyl-1,3,5-triazin-2-yl)-5-(hexyl)oxy-phenol (Tinuvin® 1577). Triazinderivate sind deshalb besonders bevorzugt, weil sie bei den für PET üblichen Verarbeitungstemperaturen von 275 - 310 °C eine gute thermische Stabilität und eine geringe Ausgasung aus der Folie aufweisen.

UV-Stabilisatoren werden der/den Deckschicht/en bzw. der Monofolie in einer bevorzugten Ausführungsform in Mengen zwischen 0,3 und 3 Gew.-%, bezogen auf das Gewicht der Schicht, zugegeben. Besonders bevorzugt ist ein UV-Stabilisatorgehalt zwischen 0,75 und 2,8 Gew.-%. Idealerweise enthalten die Deckschichten zwischen 1,2 und 2,5 % UV-Stabilisator. In der mehrschichtigen Ausführungsform der Folie enthält, neben den Deckschichten, bevorzugt auch die Basisschicht einen UV-Stabilisator, wobei der Gehalt an UV-Stabilisator in Gew.-% in dieser Basisschicht bevorzugt niedriger ist, als in der/den Deckschicht(en). Diese angegebenen Gehalte in der/den Deckschichten beziehen sich auf Triazinderivate. Wird statt eines Triazinderivats komplett oder teilweise ein UV-Stabilisator aus der Gruppe der Benzotriazole oder Benzoxazinone eingesetzt, so muss der ersetzte Anteil der Triazin-Komponente durch die 1,5 fache Menge einer Benzotriazol- oder Benzoxazinon-Komponente substituiert werden.

Weißfärbende, jedoch mit dem Hauptbestandteil Polyester inkompatible Polymere, wie Polypropylen, Cycloolefincopolymere (COC's), Polyethylen, Polystyrol etc. sind im Sinn der Erfindung zu weniger als 0,3 Gew.% (bezogen auf das Gewicht der Folie) und idealerweise überhaupt nicht (zu 0 Gew.%) enthalten, da diese zwar teilweise eine gute Lichtstreuwirkung aufweisen, aber das Brandverhalten stark negativ beeinflussen und unter UV-Einfluss zu starker Vergilbung neigen und daher erhebliche zusätzliche Mengen an UV-Stabilisator benötigen würden, was die Wirtschaftlichkeit deutlich verschlechtert.

Die Folie, im Fall einer Mehrschichtfolie mindestens die Basisschicht, enthält, zum Zwecke der Lichtstreuung, Siliziumdioxidpartikel ("Lichtstreupartikel") in einer Menge von mindestens 1,0 Gew.%, bevorzugt mindestens 1,15 Gew.% und idealerweise mindestens 1,25 Gew.%, bezogen auf das Gesamtgewicht der Folie. Der $SiO_2$-Partikelgehalt beträgt maximal 2,5 Gew.%, bevorzugt maximal 2,0 Gew.% und idealerweise maximal 1,7 Gew. %. Ist der Gehalt der Partikel zu gering ist die Lichtstreuwirkung zu gering. Ist der Gehalt zu groß, sinkt die Transparenz, steigt der unerwünschte Transparenzbow über die Folienbreite und verschlechtert sich die Laufsicherheit bei der Folienherstellung. Die zuvor genannten Siliziumdioxidpartikel haben eine durchschnittliche Partikelgröße $d_{50}$ zwischen 3 und 9 $\mu$m, bevorzugt 4 - 8 $\mu$m und idealerweise mit einen $d_{50}$-Wert von 5 - 7 $\mu$m. Diese Angaben beziehen sich auf die Partikelgröße der eingesetzten Partikel, gemessen mittels eines Malvern Master Sizer 2000. Im Vergleich zu Partikeln im zuvor genannten Größenbereich, führen Partikel mit einem $d_{50}$-Wert von kleiner als 3 $\mu$m zu einem geringeren Lichtstreuwinkel und einer größeren Transparenzreduktion, wenn der Partikelgehalt (in Gew.-%) dem der $SiO_2$-Partikel, im zuvor ge-

nannten Größenbereich, entspricht. Partikel mit einem $d_{50}$-Wert von größer als 9 $\mu$m führen bei gleichem Partikelgehalt (in Gew.-%) zu keiner weiteren Verbesserung der Lichtstreuwirkung, im Vergleich zu Partikeln im gewünschten Größenbereich. Außerdem kommt es zur Ausbildung von großen Voids (Hohlräumen) um die Partikel herum. Diese wirken transparenzreduzierend und sind zudem nicht gleichmäßig über die Folienbreite ausgeformt (im Randbereich der Folienbahn sind diese größer und stärker in Maschinenrichtung orientiert). Dies führt zu einem "Transparenz-" und "Streuungsbow" über die Folienbahnbreite, der in der Endanwendung unerwünscht ist.

Basis- und Deckschicht(en) können zudem andere Partikel zur Verbesserung der Lichtstreuwirkung, oder zur Verbesserung der Wickelbarkeit enthalten. Solche anorganischen oder organischen Partikel sind z. B. Kalziumcarbonat, Apatit, sonstige Siliziumdioxide (andere, insbesondere kleinere als die zuvor beschriebenen), Aluminiumoxid, vernetztes Polystyrol, vernetztes Polymethylmethacrylat (PMMA), Zeolithe und andere Silikate wie Aluminiumsilikate, oder auch Weißpigmente wie $TiO_2$ oder $BaSO_4$. Diese Partikel werden bevorzugt den Deckschichten zur Verbesserung der Wickelbarkeit der Folie zugegeben. Wenn solche Partikel zugegeben werden, ist die Verwendung von Siliziumdioxid basierten Partikeln bevorzugt, da diese wenig Transparenz reduzierend wirken und zudem zur Lichtstreuwirkung beitragen. Der Anteil dieser sonstigen oder anderen Partikel beträgt in keiner Schicht mehr als 1 Gew.-% und liegt bevorzugt bei unter 0,5 Gew.-% und idealerweise bei unter 0,2 Gew.-% in jeder Schicht, jeweils bezogen auf das Gesamtgewicht der betreffenden Schicht.

In einer bevorzugten Ausführungsform ist die Folie dreischichtig und die zum Zwecke der Lichtstreuung eingesetzten Partikel befinden sich zu mindestens 75 % und besonders bevorzugt zu mindestens 95 % in der Basisschicht. Idealerweise enthalten die Deckschichten jeweils weniger als 1,5 % der Lichtstreupartikel. Diese Verteilung der Lichtstreupartikel führt zu einer deutlich verbesserten Produzierbarkeit insbesondere aber zu einer deutlich verbesserten Dickengleichmäßigkeit im Vergleich z.B. zu einer Monofolie oder zu einer Folie mit einem höheren als dem bevorzugten Anteil an Partikeln in der Deckschicht. Weiterhin sinkt bei der angegebenen Verteilung der Lichtstreupartikel die Rauigkeit der Folie, was zu einer geringeren Verschmutzungstendenz (und damit Transparenzverlust) in der Endanwendung führt.

Für das Erreichen eines für Gewächshausschattenmatten geeigneten Brandverhaltens werden keine Flammschutzmittel benötigt, wenn die Gehalte an Lichtstreupartikeln und sonstigen Partikeln, sowie Weißpigmenten und inkompatiblen Polymeren innerhalb der bevorzugten oder besser innerhalb der besonders bevorzugten Bereiche liegen (die Folie erreicht dann eine Note im Brandtest von 4 oder kleiner). Werden Gehalte höher als die bevorzugten Gehalte bei einer der genannten Gruppen verwendet, oder wird für eine besondere Gewächshausanwendung ein noch weiter reduziertes Brandverhalten benötigt, so hat es sich als günstig erwiesen, wenn die Folie zudem ein Flammschutzmittel auf Basis von phosphororganischen Verbindungen enthält. Bevorzugt sind dies Ester der Phosphorsäure oder Phosphonsäure. Es hat sich dabei als günstig erwiesen, wenn die phosphorhaltige Verbindung Teil des Polyesters ist. Nicht einpolymerisierte phosphorhaltige Flammschutzmittel wie z.B. Adeka-Stab 700 (4,4'-(Isopropylidene-diphenyl)bis(diphenyl-phosphat)) haben, neben dem Nachteil einer Ausgasung des Flammschutzmittels während der Produktion, zudem einen sehr starken nachteiligen Einfluss auf die Hydrolysestabilität der Folie, d.h. des Polyesters, so dass im feuchtwarmen Gewächshausklima eine schnelle Versprödung der Folie einsetzt und die Schattenmatten ausgetauscht werden müssen. Diese Effekte werden durch die Verwendung von in die Polyesterkette eingebauten Phosphorverbindungen deutlich reduziert. Der Phosphor kann dabei Teil der Hauptkette sein, wie z.B. bei Verwendung von 2-Carboxyethyl-methylphosphinsäure (andere geeignete Verbindungen sind z.B. in DE-A-23 46 787 beschrieben). Besonders bevorzugt sind jedoch Phosphorverbindungen, bei denen sich der Phosphor in einer Seitenkette befindet, da hierdurch die Hydrolyseneigung unter Gewächshausbedingungen am geringsten ist. Solche Verbindungen sind bevorzugt Verbindungen der Formel (I):

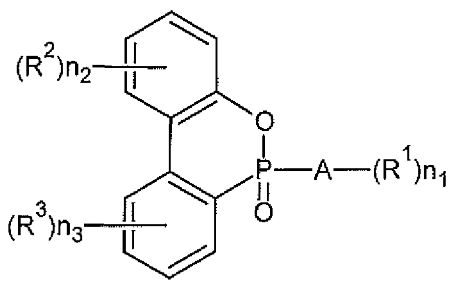

(I)

worin

| | |
|---|---|
| $R^1$ | eine esterbildende Gruppe, ausgewählt aus $-COOR^4$, $-OR^5$ und$-OCOR^6$ ist, |
| $R^2$ und $R^3$ | unabhängig voneinander ausgewählt werden aus Halogen Atomen, Kohlenwasserstoffgruppen mit 1-10 |

C-Atomen und $R^1$,

| | |
|---|---|
| $R^4$ | Wasserstoff ist oder eine Carbonylgruppe oder eine Kohlenwasserstoffgruppe mit 1-10 C-Atomen, welche eine OH-Gruppe oder Carboxylgruppe enthalten kann, |
| $R^5$ | Wasserstoff ist oder eine Kohlenwasserstoffgruppe mit 1-10 C-Atomen, welche eine OH-Gruppe oder Carboxylgruppe enthalten kann, |
| $R^6$ | eine Kohlenwasserstoffgruppe mit 1-10 C-Atomen ist, welche eine OH-Gruppe oder Carboxylgruppe enthalten kann, |
| A | eine zweiwertige oder dreiwertige Kohlenwasserstoffgruppe mit 1-8 C-Atomen ist, |
| n1 | 1 oder 2 ist, und |
| n2 und n3 | jeweils 0, 1, 2, 3 oder 4 ist, |

insbesondere worin diese Verbindung der Formel (I) zwei esterbildende funktionale Gruppen aufweist.

Besonders geeignet ist 6-Oxo-dibenzo-[c,e]-[1,2]-oxaphosphorin-6-ylmethyl-bernsteinsäure-bis(2-hydroxyethyl)-ester (CAS-Nr. 63562-34-5). Bei Verwendung dieses Monomers in der Polyesterherstellung ergeben sich Polymere mit einer verhältnismäßig niedrigen Hydrolyseneigung, die sich außerdem in der Folienherstellung bei guter Laufsicherheit verarbeiten lassen.

Die Menge an Flammschutzmittel wird in einer bevorzugten Ausführungsform so eingestellt, dass der Anteil an Phosphor in der Folie bei mindestens 500 ppm, bevorzugt bei mindestens 1200 ppm und idealerweise bei mindestens 1600 ppm liegt. Der Anteil an Phosphor liegt dabei unter 5000 ppm, bevorzugt unter 4000 ppm und idealerweise unter 3000 ppm (ppm bezogen auf die jeweiligen Gewichte aller eingesetzten Komponenten (nicht auf die Stoffmenge in Mol). Liegt der Phosphoranteil unterhalb von 500 ppm so brennt die Folie zu schnell ab. Je höher der Anteil an Phosphor wird, desto geringer wird die Abbrandgeschwindigkeit, aber umso geringer wird auch die Hydrolysestabilität. Oberhalb von 5000 ppm kann die Folie maximal ein Kalenderjahr lang eingesetzt werden. Unterhalb von 3000 ppm ist die Hydrolysegeschwindigkeit gering genug, so dass innerhalb mehrerer Einsatzjahre nicht mit einer Zersetzung durch Hydrolyse zu rechnen ist.

Der Phosphorgehalt kann sich gleichmäßig auf die Schichten verteilen, oder unterschiedlich sein. Es hat sich jedoch als günstig erwiesen, wenn die Deckschichten mindestens 75 % der Phosphorkonzentration der inneren Schicht(en) enthalten, bevorzugt enthalten sie die gleiche Phosphorkonzentration und idealerweise enthalten die Deckschichten mindestens 5 % mehr Phosphor als die Basisschicht. Dies führt zu einem besonders günstigen Brandverhalten und es wird eine insgesamt geringere Phosphormenge benötigt.

Das Polymer der Basisschicht B und der übrigen Schichten der Folie (ohne Berücksichtigung von UV-Stabilisatoren, Partikeln, Flammschutzmittel, Polyolefinen und sonstiger Additiven) besteht bevorzugt zu mindestens 80 Gew.-% aus einem thermoplastischen Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), sowie aus beliebigen Mischungen der genannten Carbonsäuren und Diole. Besonders bevorzugt sind Polyester, die zu mindestens 85 Mol-%, bevorzugt mindestens 90 Mol-% und idealerweise zu mindestens 92 Mol-% aus Ethylenglykol- und Terephthalsäure-Einheiten bestehen. Der Einsatz von Naphthalin-2,6-dicarbonsäure hat gegenüber dem Einsatz von Terephthalsäure keine Vorteile, so dass bedingt durch den höheren Preis von Naphthalin-2,6-dicarbonsäure üblicherweise auf diese verzichtet wird. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist, Cyclohexandimethanol, Butandiol, Propandiol, etc. Geeignete andere Dicarbonsäuren sind z.B. Isophthalsäure, Adipinsäure etc. Es hat sich als günstig für die Laufsicherheit und die Bewitterungsstabilität in Gewächshausanwendungen erwiesen, wenn die Folie weniger als 2 Gew.-%, bevorzugt weniger als 1,5 Gew.-% Diethylenglykol enthält. Es hat sich aus den gleichen Gründen als günstig erwiesen, wenn die Folie weniger als 12 Mol-%, bevorzugt weniger als 8 und idealerweise weniger als 5 Mol-% Isophthalsäure (IPA) bzgl. der Dicarbonsäure-Komponente des Polyesters enthält. In der bevorzugten mehrschichtigen Ausführungsform enthält jedoch mindestens eine der Deckschichten mehr als 8 Mol-% IPA und idealerweise mehr als 10 Mol-% IPA, aber weniger als 23 Mol-% IPA, bevorzugt weniger als 19 Mol-% und idealerweise weniger als 15 Mol-% bzgl. der Dicarbonsäure-Komponente des Polyesters (diese Modifikation dient der Erhöhung der Transparenz). Eine Schicht mit einem IPA-Gehalt größer 8 Mol-% enthält zudem in einer bevorzugten Ausführungsform mindestens 1,5 Gew.-% bevorzugt mehr 2,1 Gew.-% organischen UV-Stabilisator (wie oben beschrieben), um die schlechtere UV-Stabilität von Schichten mit erhöhtem IPA-gehalt zu kompensieren. Es hat sich weiterhin als günstig erwiesen, wenn die Folie weniger als 3 Mol-%, idealerweise weniger als 1 Mol-% CHDM (1,4-Cyclohexandimethanol) bzgl. der Diol-Komponente des Polyesters enthält. Es hat sich weiterhin als günstig erwiesen, wenn der Gesamtgehalt (bezogen auf das Gesamtgewicht der Folie) an Isophthalsäure, Diethylenglykol und CHDM nicht größer ist als 7 Gew.-% und idealerweise kleiner ist als 6 Gew.-%. Wenn der Gehalt an den genannten Co-Monomeren, insbesondere der von CHDM, die genannten Grenzen nicht überschreitet ist die UV-Stabilität der aus der Folie hergestellten Schattenmatten signifikant besser, als bei Ausführungen in denen die Grenzen überschritten werden.

Für die Herstellung der erfindungsgemäßen Folie wird der SV-Wert des Polyesters so gewählt, dass die Folie einen SV-Wert von > 600, bevorzugt von > 650 und idealerweise von > 700 aufweist. Der SV-Wert der Folie ist dabei < 950 und bevorzugt < 850. Liegt der SV-Wert unterhalb von 600, so wird die Folie schon bei der Herstellung so brüchig, dass es zu häufigen Abrissen kommt. Zudem kommt es in den Endanwendungen zu einem schnelleren weiteren Viskositätsverlust unter Verlust der Flexibilität der Folien mit Bruchfolge. Außerdem werden die weiter unten genannten mechanischen Festigkeiten bei geringerem SV-Wert nicht mehr sicher erreicht. Wenn die Folie einen höheren SV als 950 aufweist, dann wird das Polymer aufgrund der hohen Partikelbeladung im Extruder so zäh, dass übermäßig hohe Ströme beim Betrieb der Extruder-Elektromotoren auftreten und es zu Druckschwankungen in der Extrusion kommt. Dies führt zu einer schlechten Laufsicherheit. Außerdem wird der Abrieb an den Extrusionswerkzeugen und an den Schneidwerkzeugen unverhältnismäßig hoch.

Besonders wichtig für den Einsatz der erfindungsgemäßen Folien in GewächshausSchattenmatten ist die Transparenz in Kombination mit einem geeigneten Streuverhalten. Im Regelfall ist dabei eine besonders hohe Transparenz erwünscht, um die Pflanzen mit so viel Licht wie möglich zu versorgen. In Regionen mit sehr warmem Klima ist jedoch insbesondere in den 2 Stunden um den Sonnenhöchststand herum eine Reduktion der Lichtmenge wünschenswert. Die erfindungsgemäße Folie für Schattenmatten, die in diesen klimatischen Zonen zum Einsatz kommt, weist bevorzugt eine Transparenz auf, die zwischen 70 und 92 % liegt. Für gemäßigtes Klima (z.B. Europa, Nordamerika, Japan) liegt die Transparenz der erfindungsgemäßen Folie in bevorzugter Ausführungsform bei mindestens 80 % und insbesondere bei mindestens 83 %.

Für das geeignete Streuverhalten der erfindungsgemäßen Folie sind neben der Transparenz im Wesentlichen drei Parameter einzuhalten. Dies ist einerseits die Trübung. Diese liegt zwischen 60 - 95 %, bevorzugt zwischen 65 und 90 % und idealerweise zwischen 70 und 86 %. Der zweite Parameter ist die Clarity der Folie. Diese liegt zwischen 15 - 40 %, bevorzugt zwischen 18 und 35 % und idealerweise zwischen 21 und 30 %.

Ist die Trübung zu hoch (bzw. die Clarity zu gering), so wird das Licht zu stark gestreut. Aufgrund der Rückstreuung können dann die hohen Transparenzwerte nicht mehr erreicht werden und vor allem geht, durch den hohen Anteil von sehr stark gestreutem Licht, zu viel Licht in die Umgebung des Gewächshauses verloren, ohne dass dieses vorher auf die Pflanzen treffen konnte. Auch das eigentliche Ziel, welches mit dem Einsatz von Lichtstreufolien erreicht werden soll, nämlich die Ausleuchtung tiefer liegender Pflanzenteile wird hierdurch weniger gut erreicht, da die oberen Regionen benachbarter Pflanzen dann das Licht absorbieren und die unteren Bereiche der Nachbarpflanzen abschatten. Ist die Trübung zu gering (bzw. die Clarity zu hoch), so wird das Licht nicht ausreichend gestreut und die oberen Regionen der Pflanzen werfen einen Schlagschatten auf tiefer liegende Blätter. Die oberen Blätter erhalten so zu viel Licht und die Photosyntheseaktivität sinkt durch zu starke Erwärmung, während die unteren Blätter nicht ausreichend Licht für maximale Photosyntheseaktivität erhalten. Innerhalb der oben genannten Grenzen liegen die erfindungsgemäßen mittleren Streuwinkel für eine optimale Ausleuchtung der Pflanzen.

Diese beiden Standardgrößen Trübung und Clarity beschreiben die Streuung aber noch nicht ausreichend, da sie die Transparenz nicht berücksichtigen. Daher muss weiterhin der Streufaktor SF eingehalten werden. Der Streufaktor SF ist dabei das Verhältnis von Transparenz gemessen nach ASTM-D 1003-61 (Methode A) und der Transparenz, gemessen am Clarityport (Details siehe Messmethoden):

$$SF = \text{Transparenz nach ASTM-D 1003-61 (Methode A)} / \text{Transparenz gemessen am Clarityport}$$

Der Streufaktor SF liegt zwischen 2 und 8, bevorzugt zwischen 2,5 und 7 und idealerweise zwischen 3 und 4,5. Ist der Streufaktor zu gering, so passiert zu viel ungestreutes Licht die Folie bei der gegebenen Transparenz, mit der oben beschrieben zu geringen Ausleuchtung der unteren Pflanzenteile. ist der Streufaktor zu hoch, so geht bei der eingestellten Transparenz zu viel Licht in die Umgebung des Gewächshauses verloren (zu viel Lichtstreuung) und Nachbarpflanzen führen zu einer zu hohen Abschattung.

Die erfindungsgemäße Transparenz und das Streuverhalten wird durch die Auswahl der Partikel (insbesondere die Partikelgröße) und dem Partikelgehalt (gegebenenfalls auch die Verteilung der Partikel über die Schichten s.o.), sowie durch die geeigneten Polymere und gegebenenfalls das unten stehende Herstellverfahren erreicht.

Insbesondere für das Erreichen der erfindungsgemäßen hohen Transparenzwerte hat es sich als günstig erwiesen, wenn die Folie mehrschichtig ist und mindestens eine Deckschicht dabei einen IPA-Gehalt von 8 Mol-% IPA und idealerweise mehr als 10 Mol-% IPA, aber weniger als 23 Mol-% IPA, bevorzugt weniger als 19 Mol-% und idealerweise weniger als 15 Mol-% IPA bzgl. der Dicarbonsäure-Komponente des Polyesters aufweist. Besonders bevorzugt sind dabei Ausführungsformen mit beidseitigen Deckschichten mit dem angegebenen IPA-Gehalt. Diese Deckschichten weisen eine Dicke von < 2 µm und bevorzugt von < 1,5 µm auf. Durch solche Deckschichten sinkt der Reflektions-bedingte Transparenzverlust der Folie. Es hat sich aus dem gleichen Grund als günstig erwiesen, wenn die Folie mindestens einseitig, bevorzugt beidseitig, eine Beschichtung mit einem Material aufweist, welches einen geringeren Brechungsindex als die Polyesterfolie aufweist. Besonders geeignet sind Polyacrylate und Silikone. Geeignete Acrylate sind beispielsweise in der EP-A-0 144 948 beschrieben und geeignete Silikone beispielsweise in der EP-A-0 769 540. Die Dicke dieser Beschichtung/en beträgt jeweils mindestens 30 nm bevorzugt mindestens 50 nm und insbesondere mindestens 75 nm und beträgt maximal 150 nm, bevorzugt maximal 130 nm und idealerweise maximal 110 nm.

Hierdurch wird eine ideale Transparenzerhöhung im gewünschten Wellenlängenbereich erreicht. Die Beschichtungen werden bevorzugt inline vor der Querstreckung mittels bekannter Verfahren (reverse gravure roll oder auch meyer bar) aus bevorzugt wässriger Dispersion auf die Folie aufgebracht. In einer besonders bevorzugten Ausführungsform enthält die Beschichtung bezogen auf das Trockengewicht mindestens 1 Gew.% eines UV-Stabilisators, besonders bevorzugt ist dabei Tinuvin 479, oder Tinuvin 5333-DW.

**Verfahren zur Herstellung**

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 750 ist.

Die Weißpigmente, $SiO_2$-Partikel, sowie UV-Stabilisatoren können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Insbesondere das $SiO_2$-Partikel enthaltende Masterbatch sollte nicht mehr als 20 Gew.-%ig an $SiO_2$ sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130°C (Aufheiztemperaturen 80 bis 130°C) und in Querrichtung in einem Temperaturbereich von 90 °C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 3,4:1. Ein höheres Längsstreckverhältnis als 3,4 senkt tendenziell die Lichtstreuwirkung und sollte daher vermieden werden. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Ein höheres Querstreckverhältnis als 4 senkt tendenziell die Lichtstreuwirkung und die Transparenz und erhöht den unerwünschten Transparenzbow (Schwankung der Transparenz über die Folienbahnbreite, genauer Differenz zwischen Bahnrand (ca. 50 cm Entfernung von den Kluppen und Bahnmitte), welche nicht größer als 2 % (absolut) sein sollte, z.B. Transparenz in der Bahnmitte 80 % und 75 % an den Rändern sind eine Abweichung von 5 % absolut und damit sehr schlecht) und sollte daher bevorzugt vermieden werden. Zum Erreichen der gewünschten Folieneigenschaften hat es sich als vorteilhaft erwiesen, wenn die Strecktemperatur (in MD und TD) unter 125°C und bevorzugt unter 118 °C liegt. Vor der Querstreckung können eine oder beide Oberfläche(n) der Folie nach den an sich bekannten Verfahren In-Line beschichtet werden. Die In-Line-Beschichtung kann bevorzugt zur Aufbringung einer Beschichtung zur Transparenzerhöhung (Antireflex) benutzt werden. Bei der nachfolgenden Thermofixierung wird die Folie über eine Zeitdauer von etwa 0,1 bis 10 s unter Spannung bei einer Temperatur von 150 bis 250

°C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Zur Reduktion des Transparenzbows liegt die Temperatur im ersten Fixierfeld bevorzugt unter 220 °C und besonders bevorzugt unter 190 °C. Zudem sollten vorzugsweise aus dem gleichen Grund mindestens 1% bevorzugt mindestens 2% des Gesamtquerstreckverhältnisses im ersten Fixierfeld liegen, in dem üblicherweise nicht mehr gestreckt wird. Anschließend wird die Folie in üblicher Weise aufgewickelt.

**Weitere Folieneigenschaften**

Die erfindungsgemäße Folie nach dem oben beschrieben Verfahren weist bevorzugt bei 150 °C einen Schrumpf in Längs- und Querrichtung von unter 3 %, bevorzugt unter 2 % und besonders bevorzugt von unter 1,5 % auf. Diese Folie weist weiterhin bei 100 °C eine Ausdehnung von weniger als 3, bevorzugt von weniger als 1 und besonders bevorzugt von weniger als 0,3 % auf. Diese Formstabilität kann beispielsweise durch geeignete Relaxation der Folie vor dem Aufwickeln erhalten werden (s. Verfahrensbeschreibung). Diese Formstabilität ist wichtig, um bei der Verwendung in Schattenmatten ein Nachschrumpfen der Streifen zu vermeiden, welches zum Durchscheinen von Licht zwischen den Streifen führen würde. Sowohl bei der Herstellung von Rollos als auch bei Schattenmatten führen sowohl ein zu hoher Schrumpf als auch eine zu hohe Ausdehnung, zur wellenartigen Verdehnungen der fertigen Produkte.

Die erfindungsgemäße Folie weist weiterhin einen E-Modul in beiden Folienrichtungen von größer 3000 $N/mm^2$ und bevorzugt von größer 3500 $N/mm^2$ und besonders bevorzugt (in mindestens einer Folienrichtung) von > 4500 $N/mm^2$ in Längs- und Querrichtung auf. Die F5-Werte (Kraft bei 5 % Dehnung) liegen bevorzugt in Längs- und Querrichtung bei über 80 $N/mm^2$ und besonders bevorzugt bei über 90 $N/mm^2$. Diese mechanischen Eigenschaften können durch Variation der Parameter der biaxialen Streckung der Folie im Rahmen der oben angegebenen Verfahrensbedingungen eingestellt und erhalten werden.

Folien mit den genannten mechanischen Eigenschaften werden in der Anwendung unter Zug nicht übermäßig verdehnt und bleiben gut führbar.

**Anwendung**

Die erfindungsgemäßen Folien eignen sich hervorragend als Lichtstreufolie, insbesondere zur Herstellung von Schattenmatten in Gewächshäusern. Hierbei wird die Folie üblicherweise in schmale Streifen geschnitten, aus denen anschließend zusammen mit Polyestergarn (auch dieses muss UV-stabilisiert sein) ein Gewebe/Gelege hergestellt wird, welches im Gewächshaus aufgehängt wird. Die Streifen aus erfindungsgemäßer Folie können dabei mit Streifen aus anderen Folien kombiniert werden.

Alternativ kann auch die Folie selbst (Vollfläche, kein Gewebe) im Gewächshaus installiert werden.

Diese Installationen führen zu einer Verringerung der, die Pflanze treffenden, Lichtmenge und somit zu einer Kühlung während des Tages und verteilen gleichzeitig die verbleibende Lichtmenge durch die hohe Lichtstreuung homogen im Raum und sorgen so für eine gute Ausleuchtung aller Pflanzen/Pflanzenteile. Während der Nacht führen diese Installationen zu einem geringeren Wärmeverlust des Gewächshauses nach außen..

**Analytik**

Zur Charakterisierung der Rohstoffe und der Folien wurden die folgenden Messwerte benutzt:

**Messung des mittleren Partikel-Durchmessers $d_{50}$**

Die Bestimmung der durchschnittlichen Partikelgröße $d_{50}$ wurde mit Hilfe eines Malvern Master Sizer 2000 durchgeführt. Dazu wurden die einzusetzenden Partikel in Wasser dispergiert und in eine Küvette überführt, die im Messgerät analysiert wurde, wobei die Größenbestimmung mittels Laserbeugung erfolgte. Im Allgemeinen, nimmt dabei der Detektor ein Intensitätsbild des gebeugten Laserlichts auf, aus dessen winkelabhängiger Lichtintensität mithilfe einer mathematischen Korrelationsfunktion die Partikelgrößenverteilung berechnet wird. Die Partikelgrößenverteilung ist durch zwei Parameter gekennzeichnet, dem Medianwert $d_{50}$ (= Lagemaß für den Mittelwert) und dem Streumaß SPAN98 (= Maß für die Streuung des Partikeldurchmessers). Der Messvorgang erfolgte automatisch und beinhaltete auch die mathematische Bestimmung des $d_{50}$-Wertes.

Messungen an der mittels dieser Partikel hergestellten Folie ergeben einen um 15 - 25 % niedrigeren $d_{50}$ Wert als die eingesetzten Partikel.

**UV/Vis Spektren bzw. Transmission bei Wellenlänge x**

Die Folien wurden in Transmission in einem UV/Vis Zweistrahlspektrometer (Lambda 12 oder 35) der Firma Perkin Elmer USA gemessen. Eine etwa (3 x 5) cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird. Als Hintergrund dient Luft. Die Transmission wird bei der gewünschten Wellenlänge abgelesen.

**Transparenz**

Die Transparenz wurde nach ASTM-D 1003-61 (Methode A) gemessen mittels haze-gard plus der Firma BYK-Gardner GmbH Deutschland.

**Clarity**

Die Bestimmung der Clarity erfolgt nach Norm ASTM-D-1003 und mittels Haze-Gard Plus der Firma BYK-Garnder GmbH. Das Licht wird innerhalb eines kleinen Raumwinkels abgelenkt, sodass die Streulichtmenge in einer engen Keule konzentriert ist. Die Bildschärfe wird in einem Winkelbereich kleiner 2,5° gemessen. Zum Messen der Bildschärfe (Clarity) wird die Folie dicht an die Clarity-Öffnung angelegt.

**Beurteilung der Lichtstreueigenschaft (Messung Streufaktor SF)**

Die Lichtstreueigenschaften sind für die erfindungsgemäße Folie von besonderer Bedeutung. Die Beurteilung erfolgte mittels eines "haze-gard plus" Transparenz/Trübungsmessgerätes von BYK Gardner (BYK-Gardner GmbH • Lausitzer Strasse 8 • 82538 Geretsried • Germany). Hierzu wird die Transparenz der in einen Einspannring gespannten Folie gemessen, indem diese wie in ASTM D-1003-61 (Methode A) beschrieben bündig vor die Messöffnung für die Trübungs- und Transparenzmessung gehalten wurde. Anschließend wurde die eingespannte Folie bündig vor die Lichtaustrittsöffnung (wie bei der Claritymessung) gehalten und dabei erneut die Transparenz gemessen. Der Lichtstreufaktor SF entspricht dem Verhältnis dieser beiden Messwerte:

SF = Transparenz (gemessen gemäß ASTM-D-1003-61 Methode A) / Transparenz gemessen vor Lichtaustrittsöffnung

**SV-Wert (standard viscosity)**

Die Standardviskosität in verdünnter Lösung SV wurde, angelehnt an DIN 53728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer /100 ml reines Lösemittel. Die Auflösung des Polymers erfolgte 1 Stunde bei 60°C. Wurden die Proben nach dieser Zeit nicht vollständig gelöst, wurden noch bis zu zwei Auflösungsversuche für jeweils 40 Min. bei 80°C durchgeführt und die Lösungen anschließend 1 Stunde bei einer Drehzahl von 4100 $min^{-1}$ zentrifugiert. Aus der relativen Viskosität ($\eta_{rel}=\eta/\eta_s$) wird der dimensionslose SV-Wert wie folgt ermittelt:

$$SV = (\eta_{rel}-1) \times 1000$$

Der Anteil an Partikeln in der Folie bzw. Polymerrohstoff wurde mittels Aschebestimmung ermittelt und durch entsprechende Mehreinwaage korrigiert. D.h.:

Einwaage = (Einwaage entsprechend 100% Polymer) / [(100-Partikelgehalt in Gew.-%)/100)]

**Mechanische Eigenschaften**

Die mechanischen Eigenschaften wurden über Zugprüfung angelehnt an DIN EN ISO 572-1 und -3 (Probekörper Typ 2) an 100 mm x 15 mm großen Folienstreifen bestimmt.

**Schrumpf**

Der thermische Schrumpf wurde an quadratischen Folienmustern mit einer Kantenlänge von 10 cm bestimmt. Die Proben wurden so ausgeschnitten, dass eine Kante parallel zur Maschinenrichtung und eine Kante senkrecht zur Maschinenrichtung verlief. Die Proben wurden genau ausgemessen (die Kantenlänge $L_0$ wurde für jede Maschinenrichtung TD und MD bestimmt, $L_{0\ TD}$ und $L_{0\ MD}$) und 15 min bei der angegeben Schrumpfungstemperatur (hier 150 °C) in einem Umlufttrockenschrank getempert. Die Proben wurden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\ MD} - L_{MD}) / L_{0\ MD}, \text{ bzw.}$$

$$\text{Schrumpf [\%] TD} = 100 \bullet (L_{0\ TD} - L_{TD}) / L_{0\ TD}$$

**Ausdehnung**

Die thermische Ausdehnung wurde an quadratischen Folienmustern mit einer Kantenlänge von 10 cm bestimmt. Die Proben wurden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung:

$$\text{Ausdehnung [\%]} = 100 * (L - L_0) / L_0$$

und wurde in jeder Folienrichtung separat ermittelt.

**UV-Stabilität**

Die UV-Stabilität wurde wie in DE69731750 (DE von WO9806575) auf Seite 8 beschrieben bestimmt und der UTS Wert in % vom Ausgangswert angegeben, wobei die Bewitterungsdauer nicht 1000 sondern 2000 h betrug.

**Flammfestigkeit**

Ein 30 * 30 cm großes Folienstück wurde mit 2 Klammern an den Ecken gefasst und senkrecht aufgehängt. Im Allgemeinen ist darauf zu achten, dass am Ort der Aufhängung keine Luftbewegung herrscht, die das Folienstück merklich bewegt. Eine leichte Abluft von oben ist dabei akzeptabel. Das Folienstück wurde anschließend in der Mitte der unteren Seite mit einer Flamme von unten beflammt. Zur Beflammung kann ein handelsübliches Feuerzeug, oder besser eine Bunsenbrenner genutzt werden. Die Flamme muss dabei länger als 1 cm und kürzer als 3 cm sein. Die Flamme wurde solange an die Folie gehalten, bis diese ohne Zündflamme weiterbrennte (mindestens 3 Sekunden). Die Flamme wurde dabei aber maximal für 5 Sekunden an die Folie gehalten und der abbrennenden / wegschrumpfenden Folie nachgeführt. Es wurden 4 Zündvorgänge durchgeführt.

In den hier angeführten Beispielen wird die Flammfestigkeit mit folgenden Noten bewertet:

1 = die Folie hatte sich bei 4 Zündvorgängen keinmal länger als 3 Sekunden entzündet.

2 = die Folie hatte sich entzündet und ist nach weniger als 15 Sekunden selbst verloschen und es war noch mehr als 30 % der Folienfläche vorhanden.

3 = die Folie hatte sich entzündet und ist nach weniger als 20 Sekunden selbst verloschen und es war noch mehr als 30 % der Folienfläche vorhanden.

4 = die Folie hatte sich entzündet und ist nach weniger als 40 Sekunden selbst verloschen und es war noch mehr als 30 % der Folienfläche vorhanden.

5 = die Folie hatte sich entzündet und ist nach weniger als 40 Sekunden selbst verloschen und es war noch mehr als 10 % der Folienfläche vorhanden.

6 = die Folie hatte sich entzündet und hat mehr als 40 Sekunden gebrannt, oder es war nach dem selbst Verlöschen weniger als 10 % der Folienfläche vorhanden.

## Beispiele

Beispiel 1-3 und VB1-7

Die Polymermischungen werden bei 292 °C aufgeschmolzen und durch eine Breitschlitzdüse auf eine auf 50° C temperierte Kühlwalze elektrostatisch angelegt. Anschließend wird sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierfeld) | 3,9 | |
| Fixierung | Temperatur | 237 - 150 | °C |
| | Dauer | 3 | s |
| | Relaxation in TD bei 200 - 150 °C | 5 | % |
| Fixierung | Temperatur 1. Fixierfeld | 170 | °C |

In den Beispielen (erfindungsgemäß) kommen die folgenden Rohstoffe zum Einsatz:

PET1 = Polyethylenterephthalatrohstoff aus Ethylenglykol und Terephthalsäure mit einem SV Wert von 820 und DEG-Gehalt von 0,9 Gew.-% (Diethylenglykolgehalt als Monomer).

PET2 = Polyethylenterephthalatrohstoff mit einem SV-Wert von 720 und 23 % Bis[(5-ethyl-2-methyl-1,3,2-dioxaphosphorinan-5-yl)methyl] methyl phosphonate P,P'-dioxide (Amgard P 1045). Entspricht 18000 ppm Phosphor aus Amgard. Das Amgard wurde in einem Zweischneckenextruder in das Polyethylenterephthalat eingearbeitet.

PET3 = Polyethylenterephthalatrohstoff mit einem SV-Wert von 730, der (6-Oxo-dibenzo-[c,e]-[1,2]-oxaphosphorin-6-ylmethyl)-bernsteinsäure-bis(2-hydroxyethyl)-ester als Comonomer enthält, wobei der Anteil an Phosphor aus diesem 18000 ppm im Rohstoff beträgt.

PET4 = Polyethylenterephthalatrohstoff mit einem SV-Wert von 700, der 20 Gew.-% Tinuvin 1577 enthält. Der UV-Stabilisator hat folgende Zusammensetzung 2-(4,6-Diphenyl-1,3,5-triaziin-2-yl)-5-(hexyl)oxy-phenol (®Tinuvin 1577 der Firma BASF, Ludwigshafen, Deutschland). Tinuvin 1577 hat einen Schmelzpunkt von 149 °C und ist bei 330 °C thermisch stabil.

PET5 = Polyethylenterephthalatrohstoff mit einem SV-Wert von 700 und 15 Gew.-% Siliziumdioxidpartikel Sylysia 440 mit einem $d_{50}$ von 6,2 µm (Hersteller FUJI SILYSIA CHEMICAL LTD. Greenville NC/USA) . Das $SiO_2$ wurde in einem Zweischneckenextruder in das Polyethylenterephthalat eingearbeitet.

PET 6 = Polyethylenterephthalatrohstoff mit einem SV-Wert von 700 und 15 Gew.-% Siliziumdioxidpartikel Sylysia310 P mit einem $d_{50}$ von 2,7 µm (Hersteller FUJI SILYSIA CHEMICAL LTD. Greenville NC/USA) . Das $SiO_2$ wurde in einem Zweischneckenextruder in das Polyethylenterephthalat eingearbeitet

PET7 = Polyethylenterephthalatrohstoff mit einem SV-Wert von 600 und 60 Gew.-% $TiO_2$ (Typ R-104 von DuPont, USA, in der Rutilmodifikation). Das $TiO_2$ wurde in einem Zweischneckenextruder in das Polyethylenterephthalat eingearbeitet.

PET8 = Polyethylenterephthalatrohstoff mit einem SV-Wert von 710, der 25 Mol-% Isophthalsäure als Comonomer enthält.

Die nachfolgende Tabelle 1 fasst die Rezepturen, Herstellbedingungen und resultierenden Folieneigenschaften zusammen:

**Tabelle 1**

| | | Beispiel 1 | Beispiel 2 | Beispiel 3 | Beispiel 4 | Beispiel 5 | VB1 | VB2 | VB3 | VB4 |
|---|---|---|---|---|---|---|---|---|---|---|
| Schicht | Foliendicke | 15 | 19 | 15 | 19 | 15 | 19 | 15 | 15 | 15 |
| | Dicke A | 0,8 | 1 | 0,8 | 0,7 | 0,8 | 1 | 0,8 | 0,8 | 0,8 |
| | Dicke B | 13,4 | 17 | 13,4 | 16,8 | 13,4 | 17 | 13,4 | 13,4 | 13,4 |
| | Dicke C | 0,8 | 1 | 0,8 | 1,5 | 0,8 | 1 | 0,8 | 0,8 | 08 |
| | Beschichtung | | | | | Trockendicke 80 nm. Acrylat und Antragsmethode wie in Beispiel 1 aus EP0144948 | | | | |
| A-Schicht | PET 1 | 89 | 89 | 74 | 89 | 89 | 89 | 74 | 89 | 89 |
| | PET 2 | | | | | | | 15 | | |
| | PET 3 | | | 15 | | | | 0 | | |
| | PET 4 | 10 | 10 | 10 | 10 | 10 | 10 | 10 | 10 | 10 |
| | PET 5 | | | | | | | | | |
| | PET 6 | 1 | 1 | 1 | 1 | 1 | 1 | 1 | 1 | 1 |
| | PET 7 | | | | | | | | | |
| | PET 8 | | | | | | | | | |
| | PET 9 | | | | | | | | | |
| B-Schicht | PET 1 | 81 | 81,5 | 66 | 81 | 81 | 69 | 66 | 86 | 85 |
| | PET 2 | | | | | | | 15 | | |
| | PET 3 | | | 15 | | | | 0 | | |
| | PET 4 | 9 | 9 | 9 | 9 | 9 | 9 | 9 | 9 | 9 |
| | PET 5 | 10 | 9,5 | 10 | 10 | 10 | 22 | 10 | 2 | 0 |
| | PET 6 | | | | | | | | | 6 |
| | PET 7 | | | | | | | | 3 | |
| | PET 8 | | | | | | | | | |

(fortgesetzt)

| | | Beispiel 1 | Beispiel 2 | Beispiel 3 | Beispiel 4 | Beispiel 5 | VB1 | VB2 | VB3 | VB4 |
|---|---|---|---|---|---|---|---|---|---|---|
| | PET 9 | | | | | | | | | |
| C-Schicht | PET 1 | 89 | 89 | 74 | 0 | 89 | 89 | 74 | 89 | 89 |
| | PET 2 | | | | | | | 15 | | |
| | PET 3 | | | 15 | | | | 0 | | |
| | PET 4 | 10 | 10 | 10 | 14 | 10 | 10 | 10 | 10 | 10 |
| | PET 5 | | | | | | | | | |
| | PET 6 | 1 | 1 | 1 | 1 | 1 | 1 | 1 | 1 | 1 |
| | PET 7 | | | | | | | | | |
| | PET 8 | | | | 85 | | | | | |
| | PET 9 | | | | | | | | | |
| Transparenz (Bahnmitte) | in % | 85 | 83 | 84 | 86 | 87 | 69 | 82 | 63 | 92 |
| Transparenzbow absolut | | 1,8 | 1,5 | 1,7 | 1,7 | 1,8 | 3 | 1,8 | 3,7 | 0,5 |
| Clarity | | 24 | 22 | 23 | 25 | 23 | 11 | 22 | 10 | 45 |
| Trübung | | 77 | 80 | 78 | 79 | 77 | 96 | 77 | 93 | 57 |
| Streufaktor SF | | 3,4 | 3,6 | 3,3 | 3,5 | 3,5 | 12 | 3,4 | 9 | 1,6 |
| UV-Stabilität UTS | in % | 70 | 75 | 61 | 70 | 70 | 64 | 51 | 75 | 71 |
| Flammtest | Noten | 4 | 3 | 2 | 3 | 4 | 5 | 2 | 5 | 4 |
| E-Modul MD | N/mm2 | 4100 | 4200 | 3900 | 3900 | 4100 | 3900 | 3800 | 4100 | 4100 |
| E-Modul TD | N/mm2 | 4700 | 4600 | 4100 | 4000 | 4600 | 4000 | 3900 | 4600 | 4700 |
| F5 MD | N/mm2 | 105 | 106 | 101 | 102 | 106 | 98 | 91 | 107 | 105 |
| F5 TD | N/mm2 | 114 | 110 | 100 | 101 | 113 | 102 | 95 | 111 | 115 |
| Schrumpf MD | in % | 1,4 | 1,3 | 1,5 | 1,2 | 1,6 | 1,5 | 1,2 | 1,4 | 1,3 |
| Schrumpf TD | in % | 0,2 | 0,3 | 0,3 | 0,3 | 0,3 | 0,2 | 0,1 | 0,2 | 0,1 |

(fortgesetzt)

| | | Beispiel 1 | Beispiel 2 | Beispiel 3 | Beispiel 4 | Beispiel 5 | VB1 | VB2 | VB3 | VB4 |
|---|---|---|---|---|---|---|---|---|---|---|
| Ausdehnung MD bei 100 °C | in % | 0 | 0 | -0,1 | 0 | -0,1 | -0,1 | 0,1 | 0 | 0 |
| Ausdehnung TD bei 100 °C | in % | 0,1 | 0 | 0 | 0,1 | 0 | 0 | 0,1 | 0 | 0,1 |
| SV-Folie | | 735 | 741 | 708 | 733 | 737 | 699 | 620 | 737 | 740 |
| Transparenz Minimum zwischen 390 und 400 nm | | 41 | 39 | 41 | 43 | 45 | 18 | 4 | 14 | 61 |
| Transparenz Maximum zwischen 300 und 370 nm | | 13 | 12 | 14 | 14 | 14 | 6 | 12 | 5 | 21 |
| Bemerkung | | | | | | | 33 % mehr Folienabrisse als bei Beispiel 2 | Starke Ausgasungen im Extrusionsbereich + viele Folienabrisse | | |

## Patentansprüche

**1.** Ein- oder mehrschichtige biaxial orientierte Polyesterfolie, die eine Transparenz von 70 bis 92 % aufweist, wobei:

- die Folie mindestens 1,0 Gew.-% $SiO_2$ und maximal 2,5 Gew.-% $SiO_2$ enthält,
  - wobei diese $SiO_2$-Partikel einen $d_{50}$-Wert zwischen 3 und 9 μm aufweisen,
- der SV-Wert der Folie mindestens 700 beträgt,
- die Folie einen Streufaktor SF von mindestens 2 und nicht mehr als 8 aufweist
- die Folie eine Trübung von 60-95% aufweist und
- eine Clarity von 15-40% aufweist; und
- wobei alle außen liegenden Schichten mindestens 0,3 Gew.-% (bezogen auf das Gewicht der Schicht) eines organischen UV-Stabilisators enthalten.

wobei der SF-Wert der in einen Einspannring gespannten Folie gemessen wird, indem diese wie in ASTM D-1003-61 (Methode A) beschrieben bündig vor die Messöffnung für die Trübungs- und Transparenzmessung gehalten wird und anschließend die eingespannte Folie bündig vor die Lichtaustrittsöffnung (wie bei der Claritymessung) gehalten wird und dabei erneut die Transparenz gemessen, wobei der Lichtstreufaktor SF dem Verhältnis dieser beiden Messwerte entspricht:

SF = Transparenz (gemessen gemäß ASTM-D-1003-61 Methode A) / Transparenz gemessen vor Lichtaustrittsöffnung.

**2.** Folie nach Anspruch 1, **dadurch gekennzeichnet, dass** die Gesamtfoliendicke mind. 13 μm und maximal 25 μm beträgt.

**3.** Folie nach Anspruch 1 oder 2, **dadurch gekennzeichnet, dass** sie eine Transmission im Wellenlängenbereich von unterhalb 370 nm bis 300 nm von kleiner 40 % aufweist.

**4.** Folie nach Anspruch 1, 2 oder 3, **dadurch gekennzeichnet, dass** der organische UV-Stabilisator aus der Gruppe der Triazine, Benzotriazole oder Benzoxazinone ausgewählt wird.

**5.** Folie nach Anspruch 4, **dadurch gekennzeichnet, dass** der organische UV-Stabilisator 2-(4,6-Diphenyl-1,3,5-triazin-2-yl)-5-(hexyl)oxy-phenol ist.

**6.** Folie nach einem der Ansprüche 1 bis 5, **dadurch gekennzeichnet, dass** der oder die UV-Stabilisator(en) den jeweiligen außen liegenden Schichten in Mengen zwischen 0,3 und 3 Gew.-% (bezogen auf das Gewicht der jeweiligen Schicht), zugegeben wird/werden.

**7.** Folie nach einem der Ansprüche 1 bis 6, **dadurch gekennzeichnet, dass** die Folie weißfärbende, mit dem Folienhauptbestandteil Polyester inkompatible Polymere, zu weniger als 0,3 Gew.-% (bezogen auf das Gewicht der Folie) enthält.

**8.** Folie nach einem der Ansprüche 1 bis 7, **dadurch gekennzeichnet, dass** die Folie Kalziumcarbonat-, Apatit-, sonstige Siliziumdioxid- (andere, insbesondere kleinere als die in Anspruch 1 genannten), Aluminiumoxid-, vernetzte Polystyrol-, vernetzte Polymethylmethacrylat- (PMMA), Zeolith-, Aluminiumsilikat-, $TiO_2$- oder $BaSO_4$-Partikel in keiner Schicht zu mehr als 1 Gew.-% (bezogen auf das Gewicht der jeweiligen Schicht) vorhanden sind.

**9.** Folie nach einem der Ansprüche 1 bis 8, **dadurch gekennzeichnet, dass** die Folie dreischichtig ist und aus einer Basisschicht und zwei Deckschichten besteht, und die $SiO_2$-Partikel sich zu mindestens 75 % in der Basisschicht befinden.

**10.** Folie nach Anspruch 9, **dadurch gekennzeichnet, dass** die Deckschichten jeweils weniger als 1,5 % der $SiO_2$-partikel enthalten.

**11.** Folie nach einem der Ansprüche 1 bis 10, **dadurch gekennzeichnet, dass** die Folie mehrschichtig ist und mindestens eine Deckschicht aufweist, wobei der Polyester dieser Deckschicht einen IPA-Gehalt von 8 - 23 Mol-% bzgl. der Dicarbonsäure-Komponente des Polyesters aufweist.

**12.** Folie nach Anspruch 11, wobei die Folie dreischichtig ist und aus einer Basisschicht und zwei Deckschichten besteht wobei der Polyester beider Deckschichten einen IPA-Gehalt von 8 - 23 Mol-% (bezogen auf die Dicarbonsäure-Komponente der jeweiligen Schicht) aufweist.

**13.** Verfahren zur Herstellung einer Polyesterfolie nach Anspruch 1, wobei zunächst der Polyester bzw. die Polyestermischung der Schicht oder der einzelnen Schichten in einem oder mehreren Extrudern komprimiert und verflüssigt wird/werden, die Schmelze/Schmelzen in einer Ein- oder Mehrschichtdüse zu einem flachen Schmelzefilm ausgeformt werden, der dann auf einer Kühlwalze und einer oder mehreren Abzugswalzen als Vorfolie abgezogen wird, wobei diese abkühlt und sich verfestigt und anschließend biaxial orientiert wird, **dadurch gekennzeichnet, dass** die Folie mindestens 1,0 Gew.-% $SiO_2$ und maximal 2,5 Gew.-% $SiO_2$ enthält, wobei diese $SiO_2$-Partikel einen $d_{50}$-Wert zwischen 3 und 9 μm aufweisen, wobei alle außen liegenden Schichten mindestens 0,3 Gew.-% (bezogen auf das Gewicht der Schicht) eines organischen UV-Stabilisators enthalten.

**14.** Verwendung einer Folie nach einem der Ansprüche 1 bis 12 als Lichtstreufolie, zur Herstellung von Schattenmatten.

**15.** Verwendung einer Folie nach einem der Ansprüche 1 bis 12 in Gewächshäusern.

## Claims

**1.** Single- or multilayer biaxially oriented polyester film with transparency from 70 to 92 %, where:

- the film comprises at least 1.0 % by weight of $SiO_2$ and at most 2.5 % by weight of $SiO_2$,
    - wherein the $d_{50}$ value of these $SiO_2$ particles is from 3 to 9 μm,
- the SV value of the film is at least 700,
- the scattering factor SF of the film is at least 2 and not more than 8,
- the haze of the film is from 60 to 95 %, and
- the clarity of the film is from 15 to 40 %; and
- all of the external layers comprise at least 0.3 % by weight (based on the weight of the layer) of an organic UV stabilizer,

where the SF value of the film clamped into a clamping ring is measured by holding the film flush in front of the measurement port for the haze and transparency measurement as described in ASTM D-1003-61 (method A) and subsequently holding the clamped film flush in front of the light emergence port (as for the clarity measurement) and measuring the transparency again, the light-scattering factor SF corresponding to the ratio of these two measurements:

SF = transparency (measured as per ASTM-D-1003-61 method A)/transparency measured in front of light emergence port.

**2.** Film according to Claim 1, **characterized in that** its total thickness is at least 13 μm and at most 25 μm.

**3.** Film according to Claim 1 or 2, **characterized in that** its transmittance in the wavelength range below 370 nm to 300 nm is less than 40 %.

**4.** Film according to Claim 1, 2 or 3, **characterized in that** the organic UV stabilizer is selected from the group of triazines, benzotriazoles or benzoxazinones.

**5.** Film according to Claim 4, **characterized in that** the organic UV stabilizer is 2-(4,6-diphenyl-1,3,5-triazin-2-yl)-5-(hexyl)oxyphenol.

6. Film according to any of Claims 1 to 5, **characterized in that** the quantities of the UV stabilizer(s) added to the respective external layers are from 0.3 to 3 % by weight (based on the weight of the respective layer).

7. Film according to any of Claims 1 to 6, **characterized in that** the film comprises less than 0.3 % by weight (based on the weight of the film) of whitening polymers incompatible with the polyester that is the main constituent of the film.

8. Film according to any of Claims 1 to 7, **characterized in that** no layer of the film comprises more than 1 % by weight (based on the weight of the respective layer) of calcium carbonate particles, apatite particles, other silicon dioxide particles (differing from, in particular smaller than, those specified in Claim 1), aluminium oxide particles, crosslinked polystyrene particles, crosslinked polymethyl methacrylate (PMMA) particles, zeolite particles, aluminium silicate particles, $TiO_2$ particles or $BaSO_4$ particles.

9. Film according to any of Claims 1 to 8, **characterized in that** the film has three layers and is composed of a base layer and two outer layers, and at least 75 % of the $SiO_2$ particles are present in the base layer.

10. Film according to Claim 9, **characterized in that** the outer layers respectively comprise less than 1.5 % of the $SiO_2$ particles.

11. Film according to any of Claims 1 to 10, **characterized in that** the film has a plurality of layers and has at least one outer layer, where the IPA content of the polyester of said outer layer is from 8 to 23 % by mole with respect to the dicarboxylic acid component of the polyester.

12. Film according to Claim 11, where the film has three layers and is composed of a base layer and two outer layers, where the IPA content of the polyester of both outer layers is from 8 to 23 % by mole (based on the dicarboxylic acid component of the respective layer).

13. Process for the production of a polyester film according to Claim 1, where the polyester or, respectively, the polyester mixture of the layer or of the individual layers is/are first compressed and liquefied in one or more extruders, the melt/melts is/are shaped in a single- or multilayer die to give a flat melt film, which is then drawn off on a chill roll and one or more take-off rolls in the form of prefilm, where this is cooled and hardens and then is biaxially oriented, **characterized in that** the film comprises at least 1.0 % by weight of $SiO_2$ and at most 2.5 % by weight of $SiO_2$, where the $d_{50}$ value of these $SiO_2$ particles is from 3 to 9 $\mu$m, where all of the external layers comprise at least 0.3 % by weight (based on the weight of the layer) of an organic UV stabilizer.

14. Use of a film according to any of Claims 1 to 12 as light-scattering film, for the production of blinds.

15. Use of a film according to any of Claims 1 to 12 in greenhouses.

## Revendications

1. Feuille de polyester orientée de façon biaxiale, monocouche ou multicouche, qui présente une transparence de 70 à 92 %, dans laquelle :

   • la feuille contient au moins 1,0 % en poids de $SiO_2$ et au maximum 2,5 % en poids de $SiO_2$,

     - dans laquelle ces particules de $SiO_2$ présentent une valeur $d_{50}$ entre 3 et 9 $\mu$m,

   • la valeur SV de la feuille est d'au moins 700,
   • la feuille présente un facteur de dispersion SF d'au moins 2 et ne dépassant pas 8,
   • la feuille présente une opacité de 60 à 95 % et
   • présente une clarté de 15 à 40 % ; et
   • dans laquelle toutes les couches se trouvant à l'extérieur contiennent au moins 0,3 % en poids (par rapport au poids de la couche) d'un stabilisant organique aux UV,

dans laquelle la valeur SF de la feuille tendue dans un anneau de fixation est mesurée, en maintenant celle-ci comme le décrit la norme ASTM D-1003-61 (méthode A) de niveau devant l'ouverture de mesure pour la mesure de l'opacité et de la transparence et ensuite, en maintenant la feuille fixée de niveau devant l'ouverture de sortie

de lumière (comme dans la mesure de la clarté) et à nouveau, la transparence est mesurée, dans laquelle le facteur de dispersion de la lumière SF correspond au rapport de ces deux valeurs de mesure :

SF = transparence (mesurée selon la norme ASTM-D-1003-61, méthode A) / transparence mesurée devant l'ouverture de sortie de la lumière.

2. Feuille selon la revendication 1, **caractérisée en ce que** l'épaisseur totale de la feuille est d'au moins 13 μm et au maximum de 25 μm.

3. Feuille selon la revendication 1 ou 2, **caractérisée en ce qu'**elle présente une transmission dans la plage de longueur d'onde de moins de 370 nm à 300 nm inférieure à 40 %.

4. Feuille selon la revendication 1, 2 ou 3, **caractérisée en ce que** le stabilisant organique aux UV est choisi dans le groupe des triazines, des benzotriazoles ou des benzoxazinones.

5. Feuille selon la revendication 4, **caractérisée en ce que** le stabilisant organique aux UV est le 2-(4,6-diphényl-1,3,5-triazin-2-yl)-5-(hexyl)oxy-phénol.

6. Feuille selon l'une des revendications 1 à 5, **caractérisée en ce que** le ou les stabilisant(s) aux UV est/sont ajouté(s) aux couches extérieures respectives en quantités entre 0,3 et 3 % en poids (par rapport au poids de la couche respective).

7. Feuille selon l'une des revendications 1 à 6, **caractérisée en ce que** la feuille contient des polymères donnant une couleur blanche, incompatibles avec le polyester composant principal de la feuille, à moins de 0,3 % en poids (par rapport au poids de la feuille).

8. Feuille selon l'une des revendications 1 à 7, **caractérisée en ce que** dans la feuille, des particules de carbonate de calcium, d'apatite, de diverses particules de dioxyde de silicium (autres particules, en particulier inférieures à celles mentionnées dans la revendication 1), des particules d'oxyde d'aluminium, de polystyrène réticulé, de polyméthylméthacrylate réticulé (PMMA), de zéolithe, de silicate d'aluminium, de $TiO_2$ ou de $BaSO_4$ ne sont présentes dans aucune couche à plus de 1 % en poids (par rapport au poids de la couche respective).

9. Feuille selon l'une des revendications 1 à 8, **caractérisée en ce que** la feuille est à trois couches et est constituée d'une couche de base et de deux couches de revêtement, et les particules de $SiO_2$ se trouvent au moins à 75 % dans la couche de base.

10. Feuille selon la revendication 9, **caractérisée en ce que** les couches de revêtement contiennent respectivement moins de 1,5 % en poids de particules de $SiO_2$.

11. Feuille selon l'une des revendications 1 à 10, **caractérisée en ce que** la feuille est multicouche et présente au moins une couche de revêtement, dans laquelle le polyester de cette couche de revêtement présente une teneur en IPA de 8 à 23 % en mole concernant les composants d'acide dicarboxylique du polyester.

12. Feuille selon la revendication 11, dans laquelle la feuille est à trois couches et est constituée d'une couche de base et de deux couches de revêtement, dans laquelle le polyester des deux couches de revêtement présente une teneur en IPA de 8 à 23 % en mole (par rapport aux composants d'acide dicarboxylique de la couche respective).

13. Procédé de fabrication d'une feuille de polyester selon la revendication 1, dans lequel le polyester ou le mélange de polyester de la couche ou des couches individuelles est/sont tout d'abord comprimé(s) et fluidifié(s) dans une ou plusieurs extrudeuses, la/les masse(s) fondue(s) sont formées dans une buse monocouche ou multicouche en un film fondu plat qui est ensuite étiré sur un cylindre de refroidissement et sur un ou plusieurs cylindres de traction en tant que précurseur de feuille, dans lequel celui-ci refroidit et se solidifie et ensuite est orienté de façon biaxiale, **caractérisé en ce que** la feuille contient au moins 1,0 % en poids de $SiO_2$ et au maximum 2,5 % en poids de $SiO_2$, dans lequel ces particules de $SiO_2$ présentent une valeur $d_{50}$ entre 3 et 9 μm, dans lequel toutes les couches se trouvant à l'extérieur contiennent au moins 0,3 % en poids (par rapport au poids de la couche) d'un stabilisant

organique aux UV.

14. Utilisation d'une feuille selon l'une des revendications 1 à 12 en tant que feuille de dispersion de lumière, pour la fabrication d'ombrages.

15. Utilisation d'une feuille selon l'une des revendications 1 à 12 dans des serres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1614707 A
- DE 2346787 A
- EP 0144948 A
- EP 0769540 A
- DE 69731750
- WO 9806575 A